# EUROPEAN PATENT SPECIFICATION

(11) **EP 4 228 195 B1**
(45) Date of publication and mention of the grant of the patent: **18.06.2025**
(21) Application number: 23153224.3
(22) Date of filing: 25.01.2023
(51) Int. Cl.: H04L 5/00, H04W 24/02, H04W 24/10, H04W 88/06

(54) **CARRIER AGGREGATION**
TRÄGERAGGREGATION
AGRÉGATION DE PORTEUSES

(30) Priority: 14.02.2022 FI 20225131
(43) Date of publication of application: 16.08.2023
(73) Proprietor: Nokia Technologies Oy, 02610 Espoo (FI)
(72) Inventor: NG, Man Hung, Wiltshire, SN252JS (GB); VASENKARI, Petri Juhani, 20250 Turku (FI); UMEDA, Hiromasa, Kawasaki, 2428-4 (JP); ALI, Amaanat, 02250 Espoo (FI)
(74) Representative: Nokia EPO representatives

(56) References cited:
- HUAWEI ET AL: "On intra-band CA UE capability", vol. RAN WG4, no. Electronic meeting; 20200817 - 20200828, 7 August 2020 (2020-08-07), XP051917090, Retrieved from the Internet <URL:https://ftp.3gpp.org/tsg_ran/WG4_Radio/TSGR4_96_e/Docs/R4-2011473.zip> [retrieved on 20200807]
- NOKIA ET AL: "CA BW Class", vol. RAN WG4, no. Athens, Greece; 20180226 - 20180302, 19 February 2018 (2018-02-19), XP051402486, Retrieved from the Internet <URL:http://www.3gpp.org/ftp/tsg%5Fran/WG4%5FRadio/TSGR4%5F86/Docs/> [retrieved on 20180219]
- ERICSSON: "FR2 bandwidth class with multiple fall-back groups", vol. RAN WG4, no. Electronic meeting; 20211101 - 20211112, 22 October 2021 (2021-10-22), XP052061823, Retrieved from the Internet <URL:https://ftp.3gpp.org/tsg_ran/WG4_Radio/TSGR4_101-e/Docs/R4-2118136.zip> [retrieved on 20211022]

## Description

### FIELD

The present disclosure relates to the field of telecommunication and management of telecommunication connections.

### BACKGROUND

In wireless telecommunication, aggregating plural carriers together can be employed to obtain an aggregated carrier which employs a wider bandwidth than individual carriers. Thus an instantaneous data rate, for example, may be increased as a response to a determined need to transfer more information. Such aggregation may be referred to as carrier aggregation, CA.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core, at least one memory including computer program code, the at least one memory and the computer program code being configured to, with the at least one processing core, cause the apparatus at least to process carrier aggregation capability information, the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is be able to fall back to using a carrier aggregation bandwidth class within the same fallback group with fewer component carriers than the specific carrier aggregation bandwidth class, wherein a maximum supported component carrier bandwidth within a fallback group is constant, wherein a proper subset of the carrier aggregation bandwidth classes is associated with at least one fallback group in which it is not comprised, and use the carrier aggregation capability information to select a fallback carrier aggregation configuration, wherein the at least one fallback group associated with the proper subset of the carrier aggregation bandwidth classes has lower maximum supported component carrier bandwidth than the fallback group in which the proper subset of the carrier aggregation bandwidth classes is comprised.

According to a second aspect of the present disclosure, there is provided a method comprising processing carrier aggregation capability information, the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is be able to fall back to using a carrier aggregation bandwidth class within the same fallback group with fewer component carriers than the specific carrier aggregation bandwidth class, wherein a maximum supported component carrier bandwidth within a fallback group is constant, wherein a proper subset of the carrier aggregation bandwidth classes is associated with at least one fallback group in which it is not comprised, and using the carrier aggregation capability information to select a fallback carrier aggregation configuration, wherein the at least one fallback group associated with the proper subset of the carrier aggregation bandwidth classes has lower maximum supported component carrier bandwidth than the fallback group in which the proper subset of the carrier aggregation bandwidth classes is comprised.

According to a third aspect of the present disclosure, there is provided an apparatus comprising means for processing carrier aggregation capability information, the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is be able to fall back to using a carrier aggregation bandwidth class within the same fallback group with fewer component carriers than the specific carrier aggregation bandwidth class, wherein a maximum supported component carrier bandwidth within a fallback group is constant, wherein a proper subset of the carrier aggregation bandwidth classes is associated with at least one fallback group in which it is not comprised, and using the carrier aggregation capability information to select a fallback carrier aggregation configuration, wherein the at least one fallback group associated with the proper subset of the carrier aggregation bandwidth classes has lower maximum supported component carrier bandwidth than the fallback group in which the proper subset of the carrier aggregation bandwidth classes is comprised.

According to a fourth aspect of the present disclosure, there is provided a non-transitory computer readable medium having stored thereon a set of computer readable instructions that, when executed by at least one processor, cause an apparatus to at least process carrier aggregation capability information, the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is be able to fall back to using a carrier aggregation bandwidth class within the same fallback group with fewer component carriers than the specific carrier aggregation bandwidth class, wherein a maximum supported component carrier bandwidth within a fallback group is constant, wherein a proper subset of the carrier aggregation bandwidth classes is associated with at least one fallback group in which it is not comprised, and use the carrier aggregation capability information to select a fallback carrier aggregation configuration, wherein the at least one fallback group associated with the proper subset of the carrier aggregation bandwidth classes has lower maximum supported component carrier bandwidth than the fallback group in which the proper subset of the carrier aggregation bandwidth classes is comprised.

According to a fifth aspect of the present disclosure, there is provided a computer program configured to cause a computer to perform at least the following, when run: processing carrier aggregation capability information, the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is be able to fall back to using a carrier aggregation bandwidth class within the same fallback group with fewer component carriers than the specific carrier aggregation bandwidth class, wherein a maximum supported component carrier bandwidth within a fallback group is constant, wherein a proper subset of the carrier aggregation bandwidth classes is associated with at least one fallback group in which it is not comprised, and using the carrier aggregation capability information to select a fallback carrier aggregation configuration, wherein the at least one fallback group associated with the proper subset of the carrier aggregation bandwidth classes has lower maximum supported component carrier bandwidth than the fallback group in which the proper subset of the carrier aggregation bandwidth classes is comprised.

3GPP TDoc R4-2011473 describes associating bandwidth classes with supported PA architecture and supported MIMO layers.

3GPP TDoc R4-1802111 describes the support of bandwidth classes within the same fall back group.

3GPP TDoc R4-2118136 describes a fallback group comprising multiple bandwidth classes.

### BRIEF DESCRIPTION OF THE DRAWINGS

FIGURE 1 illustrates an example system in accordance with at least some embodiments of the present invention;
FIGURE 2 illustrates an example of carrier aggregation capability information;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

In accordance with methods and processes disclosed herein, a more versatile carrier aggregation mechanism may be obtained with an efficient signalling process. In detail, fallback rules in carrier aggregation may be defined in a manner which supports more versatile fallback options and more efficient carrier aggregation capability signalling.

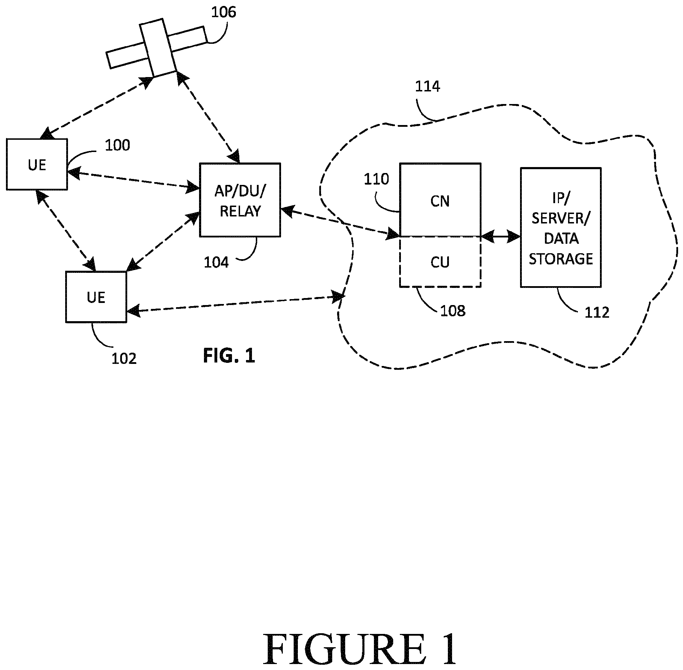

FIGURE 1 illustrates an example system in accordance with at least some embodiments. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

FIGURE 1 depicts examples of simplified system architectures only showing some elements and functional entities, all being logical units, whose implementation may differ from what is shown. The connections shown in FIGURE 1 are logical connections; the actual physical connections may be different. It is apparent to a person skilled in the art that the system typically comprises also other functions and structures than those shown in FIGURE 1. The embodiments are not, however, restricted to the system given as an example but a person skilled in the art may apply the solution to other communication systems provided with necessary properties. Examples of such other communication systems include microwave links and optical fibers, for example.

The example of FIGURE 1 shows a part of an exemplifying radio access network. FIGURE 1 shows user devices 100 and 102 configured to be in a wireless connection on one or more communication channels in a cell with an access node (such as (e/g)NodeB) 104 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage. A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of the communication system it is coupled to. The NodeB may also be referred to as a base station, BS, an access point or any other type of interfacing device including a relay station such as DU (distributed unit) part of IAB (integrated access and backhaul) node capable of operating in a wireless environment. The DU part may facilitate the gNB functionalities of the IAB node. The (e/g)NodeB includes or is coupled to transceivers. From the transceivers of the (e/g)NodeB, a connection is provided to an antenna unit that establishes bi-directional radio links to user devices, such as user equipments. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobility management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, also including a relay node. An example of such scenario is MT (mobile termination) part of IAB node, which provides the backhaul connection for the IAB node.

The user device, or user equipment, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors, microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIGURE 1) may be implemented inside these apparatuses, to enable the functioning thereof.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility. 5G uses frequency range 1, FR1, ranging from 410 MHz to 7125 MHz and frequency range 2, FR2, ranging from 24.25 GHz to 52.6 GHz.

Architecture in LTE networks is distributed in the radio and centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in FIGURE 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology advancements, such as Big Data and all-IP, may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

The depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. A cellular radio system may be implemented as a multilayer network including several kinds of cells, such as macrocells, microcells and picocells, for example. Typically, in multilayer networks, one access node provides one kind of a cell or cells, and thus a plurality of (e/g)NodeBs are required to provide such a network structure.

In unlicensed-band NR operation, a bandwidth part, BWP, may comprise plural sub-bands separated from each other by guard bands. The sub-bands may be, but need not be, 20 MHz wide, for example. Operation on the BWP may proceed based on sub-band specific listen-before talk, LBT, operation. In LBT, a node desiring to use a spectrum resource will listen on the resource before using it, and only proceed to transmit on the resource in case the listening indicates the resource appears to be free, that is, not currently in use. Simultaneous use of the same resource by plural transmitters leads to interference and decreased quality of communication on the resource.

A bandwidth part, BWP, is a contiguous set of physical resource blocks, PRBs, on a given carrier. A carrier bandwidth may be 40 MHz, 80 MHz or 160 MHz, for example. These PRBs are selected from a contiguous subset of the usable common resource blocks for a given numerology on a carrier. A BWP may be characterized by the following features: subcarrier spacing, SCS, sub-band number and sub-band bandwidth. SCS may take values such as 15 kHz, 30 kHz or 60 kHz, for example. A carrier may comprise 2, 3, 4, 5 or 8 sub-bands of 20-MHz bandwidth, for example. A PRB may have 12 subcarriers, for example. Likewise, a normal scheduling unit in time (known as a slot) may be 12 or 14 OFDM symbols long. Furthermore, NR supports mini-slot based operation with the scheduling unit in time smaller than one slot, for example 2, 4 or 7 OFDM symbols. In 5G, the PRB may be both 12 subcarriers wide and 14 OFDM symbols long, assuming normal cyclic prefix. A transmission bandwidth, TX BW, is a part of the spectrum on which a node actually transmits following the listening phase of LBT of a sub-band specific LBT process. The TX BW may be the entire bandwidth of BWP, or a portion thereof, in dependence of a result of the listening phase.

Carrier aggregation, CA, is a solution to increase in instantaneous datarate available to a user equipment, wherein multiple separate carriers, known as component carriers, CCs, are assigned to the user equipment. The datarate per user is increased the more component carriers are aggregated together. When the component carriers are adjacent to each other in frequency, the aggregation is referred to as contiguous carrier aggregation or intra-band contiguous carrier aggregation. When the component carriers are not adjacent, but on the same frequency band, the aggregation is referred to as intra-band non-contiguous carrier aggregation. In case the component carriers are on different frequency bands, the aggregation is referred to as inter-band carrier aggregation. In particular, in contiguous carrier aggregation, the component carriers form a contiguous block without carrier(s) that are separated in frequency.

A fallback process to a carrier aggregation configuration having fewer carriers may be invoked for various reasons, for example, in case interference on one of the component carriers degrades performance, or simply in case a smaller datarate has become sufficient due to changes in communication patterns. A fallback group is a group of carrier aggregation bandwidth classes for which it is mandatory for a UE to be able to fallback to lower order CA bandwidth class configuration. In other words, a UE needs to be able to reduce the number of component carriers aggregated together in the CA configuration it is using, to switch to another CA bandwidth class in the same fallback group with fewer components carriers.

A simple example carrier aggregation capability information is provided in the following table:

| CA bandwidth class | Aggregated channel bandwidth (BW) | Number of contiguous CCs | Fallback group |
|---|---|---|---|
| A | BW(A) | 2 | 1 |
| B | BW(B) | 3 | |
| C | BW(C) | 2 | 2 |
| D | BW(D) | 4 | |
| E | BW(E) | 2 | 3 |
| F | BW(F) | 8 | |

Here the bandwidth classes are named A - F, and they are allocated into fallback groups 1, 2 and 3. For example, in case a UE is communicating using bandwidth class D, it may fall back to bandwidth class C as C is in the same fallback group and has fewer component carriers, CCs. Of note is that in the table above there is many-to-one mapping of bandwidth classes to fallback groups, namely, plural bandwidth classes are in each fallback group, and each bandwidth class is in only one fallback group.

In some situations, however, it would be beneficial for a UE to be able to fall back to a bandwidth class in a different fallback group. For example, as bandwidth classes in one fallback group have the same maximum supported component carrier bandwidth, in some situations it would be useful to switch to a bandwidth class with a smaller maximum component carrier bandwidth. In particular, using a smaller bandwidth could be useful in case a radio path used for communication deteriorates, or if a UE does not support all bandwidth classes with the larger maximum component carrier bandwidth due to, for example, limitation on supported aggregated channel bandwidth. Lack of support may occur as older UEs are kept in use as newer bandwidth classes are introduced, for example.

One manner of accomplishing this would be to define additional bandwidth classes in carrier aggregation capability information, such that these new additional bandwidth classes would be present in two or more different fallback groups, to enable selecting a bandwidth class to fall back on. While this would solve the problem of enabling more versatile fallback, signalling support for bandwidth classes would consume more resources, since the new bandwidth classes would need to be signalled from the UE to the network upon attachment to the network, for example, for each supported CA band in each supported CA band combination. Thus signalling support for bandwidth classes would consume more communication resources, such as energy and/or time. Consequently, it would be advantageous to enable a versatile fallback carrier aggregation mechanism which may be signalled using as few bits as possible.

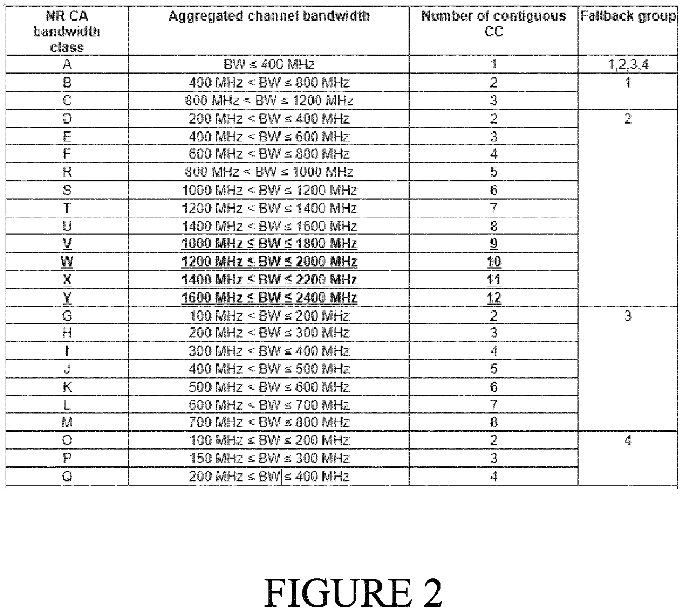

FIGURE 2 illustrates an example of carrier aggregation capability information. On the left are carrier aggregation bandwidth classes, in this example for new radio, NR, another term for 5G as standardized by the 3^{rd} generation partnership project, 3GPP. The aggregated channel bandwidth indicates the aggregate bandwidth of the component carriers aggregated together, the information of FIGURE 2 relating to contiguous carrier aggregation.

In this example, maximum supported component carrier bandwidths for fallback groups 1, 2, 3 and 4 are 400 MHz, 200 MHz, 100 MHz and 100 MHz, respectively except for bandwidth class A. In the illustrated carrier aggregation capability information is mandatory for a UE to be able to fallback to lower order CA bandwidth class configuration within a fallback group. Likewise, it is not mandatory for a UE to be able to fallback to lower order CA bandwidth class configuration that belongs to a different fallback group unless unless the CA bandwidth class the UE is using is associated with the different fallback group. In FIGURE 2, bandwidth classes V, W, X and Y are associated with fallback group 3 and it is mandatory for a UE to be able to fallback from one of these to a same or lower order CA bandwidth class configuration, with the same or a lower number of contiguous CCs, within fallback group 3.

As bandwidth class A only has one component carrier, it is not in fact genuinely a carrier aggregation bandwidth class since no carriers are aggregated when using it. The number of bandwidth classes in the figure is an example to which the present disclosure is not limited. It is present in FIGURE 2 to provide an ultimate fall-back configuration to all the aggregated bandwidth classes. An important distinction is that the bandwidth classes listed under fallback group 2 have a maximum CC bandwidth of 200 MHz, while those listed under fallback group 3 have a maximum CC bandwidth of 100 MHz. The maximum is the supported CC bandwidth, for CA bandwidth class S, for example, there are 6 CCs, 5 CCs each with 200 MHz, and the last CC with smaller or equal to 200 MHz, thus aggregated channel bandwidth is 1000 MHz < BW ≤ 1200 MHz. It is mandatory for a UE to be able to fallback to lower order CA bandwidth class (that is, one with fewer CCs) configuration within a fallback group. In addition to this, bandwidth classes V, W, X and Y are capable of falling back to a bandwidth class in fallback group 3. In other words, a proper subset (that is, a subset which does not comprise all the elements of the superset of all CA bandwidth classes) of the bandwidth classes is both comprised in a fallback group and, separately, associated with at least another one of the fallback groups. For example, the associated fallback group may have a smaller maximum CC bandwidth than the fallback group in which the proper subset of the bandwidth classes is comprised.

When falling back to a bandwidth class in the fallback group with which the proper subset is associated, the bandwidth class selected for fallback may have the same number of CCs, or a smaller number of CCs, as the bandwidth class in the proper subset from which the fallback originates. It is thus possible to maintain the number of CCs, but reduce at least one of their bandwidths, in the fallback process. Thus the aggregated bandwidth is reduced in the fallback process compared to the original bandwidth class. As can be seen from FIGURE 2, as the number of CCs in the bandwidth classes fallback group 3 is lower than in the proper subset, a fallback to any of the bandwidth classes in fallback group 3 is possible from any one of the bandwidth classes in the proper subset.

The newly defined bandwidth classes V, W, X and Y (note that the indices V, W, X, Y are used as examples and other indices may equally be used) can be mapped to those bandwidth class combinations as follows:
V -> MA, LD, KE, JF, IR, HS, GT
W -> MD, LE, KF, JR, IS, HT
X -> ME, LF, KR, JS, IT
Y -> MF, LR, KS, JT

Therefore, network operators can gradually migrate 100 MHz CCs to 200 MHz CCs, one-by-one, for example, in their CA configurations following spectrum acquisition and equipment (UE and base station) availability, for example from bandwidth class combination MA to LD to KE to JF to IR to HS to GT using bandwidth class V with the least overhead on RRC signalling. Other options require more radio resource control, RRC, signalling overhead to achieve the CA configurations considering migration of bandwidth classes.

Moreover, each of the newly defined bandwidth classes V, W, X and Y, which form the proper subset in the example of FIGURE 2, is mapped to fallback group 2, where they are comprised, and fallback group 3, with which they are associated. There is no need to define new bandwidth classes which belong to fallback group 3, which has a smaller maximum supported CC bandwidth than fallback group 2. This is feasible, since normally a UE supporting 200 MHz CCs in one band in one band combination can also support 100 MHz CCs in this band. Therefore, a UE supporting a bandwidth class which belongs to fallback group 2 in one band in one band combination can technically also support a bandwidth class which belongs to fallback group 3 with the same or a smaller number of contiguous CC in this band and band combination.

The same principle can also apply to fallback groups with other maximum supported CC bandwidths than 100 MHz or 200 MHz. For example, a UE supporting bandwidth class C which belongs to fallback group 1 (CC maximum width 400 MHz) can technically also support bandwidth class D or E which belongs to fallback group 2 (CC maximum width 200 MHz) with the same or a smaller number of contiguous CC, that is, the same or a lower number of contiguous CCs. In general, this versatility is achieved by mapping at least some bandwidth classes with plural CCs with more than one fallback group.

Consequently, to support for CA bandwidth class configurations consisting of CA bandwidth classes which belong to different fallback groups, new bandwidth classes only need to be defined in the fallback group with the largest maximum supported CC bandwidth among the fallback groups, with each of the new bandwidth class being mapped to at least one of the other fallback groups which have the same or smaller maximum supported CC bandwidths.

In practical terms, a user equipment may indicate its support for the proper subset of bandwidth classes, for example, by providing the following information elements to the network:
CA-BandwidthClass ::= ENUMERATED {a, b, c, d, e, f, g, h, i, j, k, l, m, n, o, p, q, r, s, t, u, v, w, x, y, ...}
CA-BandwidthClassNR-r17 ::= ENUMERATED {r, s, t, u, v, w, x, y, ...}

The first one of the information elements above may be communicated using [log₂(25)] = 5 bits, and the latter one using [log₂(8)] = 3 bits.

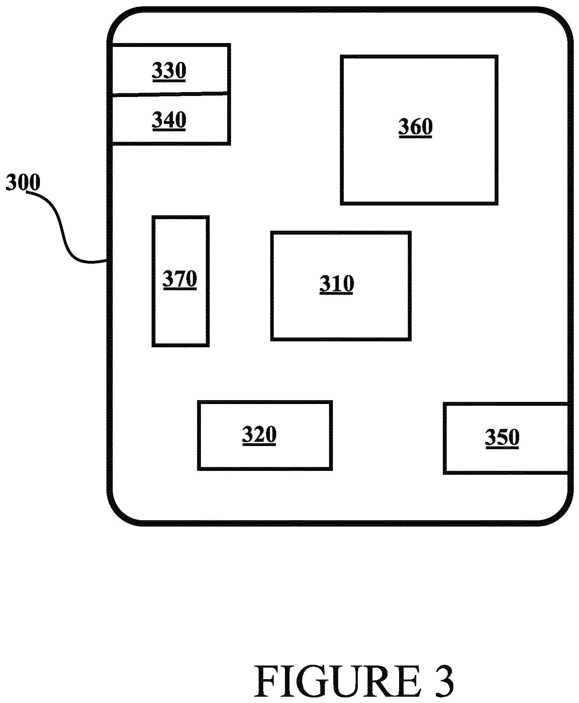

FIGURE 3 illustrates an example apparatus capable of supporting at least some embodiments of the present invention. Illustrated is device 300, which may comprise, for example, a mobile communication device such as a UE or, in applicable parts, a base station node. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300 such as processing and using. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s), software, and memory(ies) that work together to cause an apparatus, such as a mobile phone or base station, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise randomaccess memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

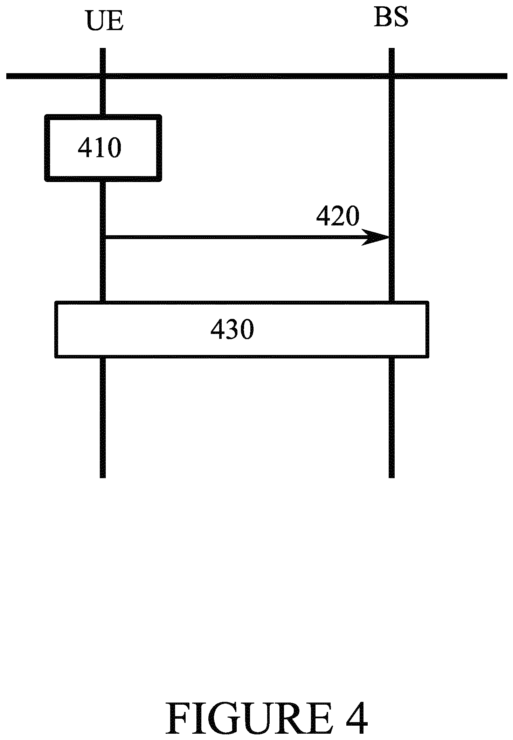

FIGURE 4 illustrates signalling in accordance with at least some embodiments of the present invention. On the vertical axes are disposed, on the left, UE 110 of FIGURE 1, and on the right, a base station. Time advances from the top toward the bottom.

In phase 410, the UE stores the carrier aggregation capability information of the user equipment. In phase 420, which may take place in connection with an attachment, such as initial attachment, to a wireless communication network, the UE signals to the base station BS to indicate the carrier aggregation capability information, at least in part. In particular, the UE may indicate the proper subset of carrier aggregation bandwidth classes which are comprised in a first fallback group and associated with a second fallback group, wherein the second fallback group has a narrower maximum CC bandwidth than the first group, and the carrier aggregation capability information indicates the UE supports fallback from bandwidth classes in the proper subset to bandwidth classes in the second fallback group.

In phase 430, the UE and the network may negotiate concerning establishing a carrier aggregation, CA, session, which may be based, at least in part, on the carrier aggregation capability information communicated in phase 420.

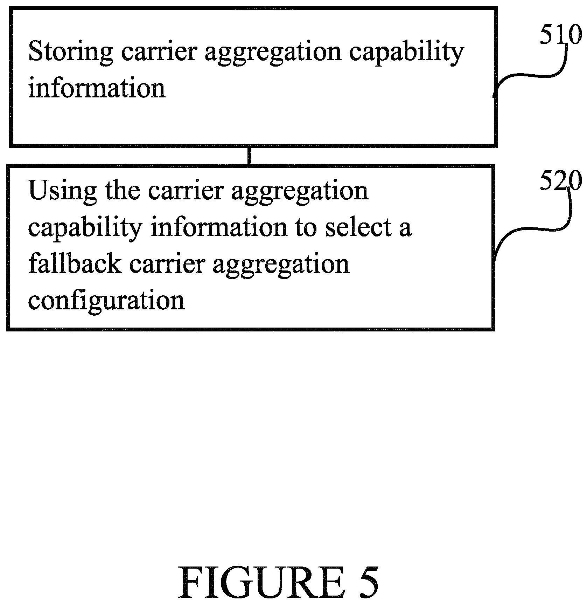

FIGURE 5 is a flow graph of a method in accordance with at least some embodiments of the present invention. The phases of the illustrated method may be performed in a user equipment or a base station, for example, or in a control device configured to control the functioning thereof, when installed therein.

Phase 510 comprises processing carrier aggregation capability information, the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class must be able to fall back to using a carrier aggregation bandwidth class within the same fallback group with fewer component carriers than the specific carrier aggregation bandwidth class, wherein a maximum supported component carrier bandwidth within a fallback group is constant, wherein a proper subset of the carrier aggregation bandwidth classes is associated with at least one fallback group in which it is not comprised. Phase 520 comprises using the carrier aggregation capability information to select a fallback carrier aggregation configuration, wherein the fallback group(s) associated with the proper subset of the carrier aggregation bandwidth classes has lower maximum supported component carrier bandwidth(s) than the fallback group in which the proper subset of the carrier aggregation bandwidth classes is comprised.

When the proper subset is associated with more than one fallback group in which it is not comprised, the system, may choose, in the event of a fallback, from among the plural associated fallback groups, which one to use. This provides the technical benefit that a broader range of fallback options is available.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in management of wireless communication.

### ACRONYMS LIST

- 3GPP: 3^{rd} generation partnership project
- CA: carrier aggregation
- CC: component carrier
- RRC: radio resource connection

## Claims

1. An apparatus comprising:
- means for processing carrier aggregation capability information (510), the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is able to fall back to using a carrier aggregation bandwidth class within the same fallback group with fewer component carriers than the specific carrier aggregation bandwidth class, wherein a maximum supported component carrier bandwidth within a fallback group is constant,
- characterised,
- wherein a proper subset of the carrier aggregation bandwidth classes is associated with at least one fallback group in which it is not comprised, and
- means for using the carrier aggregation capability information to select a fallback carrier aggregation configuration (520), wherein the at least one fallback group associated with the proper subset of the carrier aggregation bandwidth classes has lower maximum supported component carrier bandwidth than the fallback group in which the proper subset of the carrier aggregation bandwidth classes is comprised.

2. The apparatus according to claim 1, wherein the carrier aggregation capability information defines that a communication device using a carrier aggregation bandwidth class within the proper subset is capable to fall back to using a carrier aggregation bandwidth class in the fallback group associated with the proper subset of carrier aggregation bandwidth classes.

3. The apparatus according to any of claims 1 - 2, wherein each carrier aggregation bandwidth class comprises at least two contiguous component carriers .

4. The apparatus according to any of claims 1 - 3, wherein the carrier aggregation capability information comprises at least four distinct fallback groups.

5. The apparatus according to any of claims 1 - 4, wherein the carrier aggregation capability information comprises at least 23 carrier aggregation bandwidth classes.

6. The apparatus according to any of claims 1 - 5, wherein the proper subset comprises at least one carrier aggregation bandwidth class.

7. The apparatus according to any of claims 1 - 6, wherein the maximum supported component carrier bandwidth in the fallback group associated with the proper subset of the carrier aggregation bandwidth class is between 97 and 103 megahertz.

8. The apparatus according to any of claims 1 - 7, wherein the maximum supported component carrier bandwidth in the fallback group in which the proper subset of the carrier aggregation bandwidth class is comprised is between 197 and 203 megahertz.

9. The apparatus according to any of claims 1 - 8, wherein, in carrier aggregation bandwidth classes in the proper subset, a number of contiguous component carriers ranges from nine to twelve.

10. The apparatus according to any of claims 1 - 9, wherein, in carrier aggregation bandwidth classes in the fallback group associated with the proper subset of carrier aggregation bandwidth classes, a number of contiguous component carriers ranges from two to eight.

11. A method comprising:
- processing carrier aggregation capability information (510), the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is able to fall back to using a carrier aggregation bandwidth class within the same fallback group with fewer component carriers than the specific carrier aggregation bandwidth class, wherein a maximum supported component carrier bandwidth within a fallback group is constant,
- characterised,
- wherein a proper subset of the carrier aggregation bandwidth classes is associated with at least one fallback group in which it is not comprised, and
- using the carrier aggregation capability information to select a fallback carrier aggregation configuration (520), wherein the at least one fallback group associated with the proper subset of the carrier aggregation bandwidth classes has lower maximum supported component carrier bandwidth than the fallback group in which the proper subset of the carrier aggregation bandwidth classes is comprised.

12. The method according to claim 11, wherein the carrier aggregation capability information defines that a communication device using a carrier aggregation bandwidth class within the proper subset is capable to fall back to using a carrier aggregation bandwidth class in the fallback group associated with the proper subset of carrier aggregation bandwidth classes.

13. The method according to any of claims 11 - 12, wherein each carrier aggregation bandwidth class comprises at least two contiguous component carriers.

14. A non-transitory computer readable medium having stored thereon a set of computer readable instructions that, when executed by at least one processor, cause an apparatus to at least:
- process carrier aggregation capability information (510), the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is able to fall back to using a carrier aggregation bandwidth class within the same fallback group with fewer component carriers than the specific carrier aggregation bandwidth class, wherein a maximum supported component carrier bandwidth within a fallback group is constant,
- characterised,
- wherein a proper subset of the carrier aggregation bandwidth classes is associated with at least one fallback group in which it is not comprised, and
- use the carrier aggregation capability information to select a fallback carrier aggregation configuration (520), wherein the at least one fallback group associated with the proper subset of the carrier aggregation bandwidth classes has lower maximum supported component carrier bandwidth than the fallback group in which the proper subset of the carrier aggregation bandwidth classes is comprised.

15. A computer program configured to cause a computer to perform at least the following, when run:
- processing carrier aggregation capability information (510), the carrier aggregation capability information defining a plurality of carrier aggregation bandwidth classes, each carrier aggregation bandwidth class being associated with exactly one number of plural contiguous component carriers used when communicating using the respective carrier aggregation bandwidth class, each carrier aggregation bandwidth class being comprised in a fallback group, each fallback group comprising plural carrier aggregation bandwidth classes, the carrier aggregation capability information defining that a communication device using a specific carrier aggregation bandwidth class is able to fall back to using a carrier aggregation bandwidth class within the same fallback group with fewer component carriers than the specific carrier aggregation bandwidth class, wherein a maximum supported component carrier bandwidth within a fallback group is constant,
- characterised,
- wherein a proper subset of the carrier aggregation bandwidth classes is associated with at least one fallback group in which it is not comprised, and
- using the carrier aggregation capability information to select a fallback carrier aggregation configuration (520), wherein the at least one fallback group associated with the proper subset of the carrier aggregation bandwidth classes has lower maximum supported component carrier bandwidth than the fallback group in which the proper subset of the carrier aggregation bandwidth classes is comprised.

## Patentansprüche

1. Einrichtung, die Folgendes umfasst:
- Mittel zum Verarbeiten von Trägeraggregationsfähigkeitsinformationen (510), wobei die Trägeraggregationsfähigkeitsinformationen eine Vielzahl von Trägeraggregationsbandbreitenklassen definieren, wobei jede Trägeraggregationsbandbreitenklasse mit genau einer Anzahl von mehreren durchgehenden Komponententrägern verknüpft ist, die beim Kommunizieren unter Verwendung der jeweiligen Trägeraggregationsbandbreitenklasse verwendet werden, wobei jede Trägeraggregationsbandbreitenklasse in einer Fallbackgruppe umfasst ist, wobei jede Fallbackgruppe mehrere Trägeraggregationsbandbreitenklassen umfasst, wobei die Trägeraggregationsfähigkeitsinformationen definieren, dass eine Kommunikationsvorrichtung, die eine spezifische Trägeraggregationsbandbreitenklasse verwendet, auf das Verwenden einer Trägeraggregationsbandbreitenklasse in derselben Fallbackgruppe mit weniger Komponententrägern als die spezifische Trägeraggregationsbandbreitenklasse zurückfallen kann, wobei eine maximale unterstützte Komponententrägerbandbreite in einer Fallbackgruppe konstant ist,
- gekennzeichnet,
- wobei ein korrekter Untersatz der Trägeraggregationsbandbreitenklassen mit mindestens einer Fallbackgruppe verknüpft ist, in die sie nicht umfasst ist, und
- Mittel zum Verwenden der Trägeraggregationsfähigkeitsinformationen, um eine Fallbackträgeraggregationsauslegung (520) auszuwählen, wobei die mindestens eine Fallbackgruppe, die mit dem korrekten Untersatz von Trägeraggregationsbandbreitenklassen verknüpft ist, eine niedrigere maximale unterstützte Komponententrägerbandbreite aufweist als die Fallbackgruppe, in der der korrekte Untersatz von Trägeraggregationsbandbreitenklassen umfasst ist.

2. Einrichtung nach Anspruch 1, wobei die Trägeraggregationsfähigkeitsinformationen definieren, dass eine Kommunikationsvorrichtung, die eine Trägeraggregationsbandbreitenklasse im korrekten Untersatz verwendet, in der Lage ist, zum Verwenden einer Trägeraggregationsbandbreitenklasse in der Fallbackgruppe zurückzufallen, die mit dem korrekten Untersatz von Trägeraggregationsbandbreitenklassen verknüpft ist.

3. Einrichtung nach einem der Ansprüche 1 bis 2, wobei jede Trägeraggregationsbandbreitenklasse mindestens zwei durchgehende Komponententräger umfasst.

4. Einrichtung nach einem der Ansprüche 1 bis 3, wobei die Trägeraggregationsfähigkeitsinformationen mindestens vier eindeutige Fallbackgruppen umfassen.

5. Einrichtung nach einem der Ansprüche 1 bis 4, wobei die Trägeraggregationsfähigkeitsinformationen mindestens 23 Trägeraggregationsbandbreitenklassen umfassen.

6. Einrichtung nach einem der Ansprüche 1 bis 5, wobei der korrekte Untersatz mindestens eine Trägeraggregationsbandbreitenklasse umfasst.

7. Einrichtung nach einem der Ansprüche 1 bis **6.** wobei die maximale unterstützte Komponententrägerbandbreite in der Fallbackgruppe, die mit dem korrekten Untersatz der Trägeraggregationsbandbreitenklasse verknüpft ist, zwischen 97 und 103 Megahertz beträgt.

8. Einrichtung nach einem der Ansprüche 1 bis 7. wobei die maximale unterstützte Komponententrägerbandbreite in der Fallbackgruppe, in der der korrekte Untersatz der Trägeraggregationsbandbreitenklasse umfasst ist, zwischen 197 und 203 Megahertz beträgt.

9. Einrichtung nach einem der Ansprüche 1 bis 8, wobei in Trägeraggregationsbandbreitenklassen im korrekten Untersatz eine Anzahl von durchgehenden Komponententrägern von neun bis zwölf liegt.

10. Einrichtung nach einem der Ansprüche 1 bis 9, wobei in Trägeraggregationsbandbreitenklassen in der Fallbackgruppe, die mit dem korrekten Untersatz von Trägeraggregationsbandbreitenklassen verknüpft ist, eine Anzahl von durchgehenden Komponententrägern von zwei bis acht liegt.

11. Verfahren, das Folgendes umfasst:
- Verarbeiten von Trägeraggregationsfähigkeitsinformationen (510), wobei die Trägeraggregationsfähigkeitsinformationen eine Vielzahl von Trägeraggregationsbandbreitenklassen definieren, wobei jede Trägeraggregationsbandbreitenklasse mit genau einer Anzahl von mehreren durchgehenden Komponententrägern verknüpft ist, die beim Kommunizieren unter Verwendung der jeweiligen Trägeraggregationsbandbreitenklasse verwendet werden, wobei jede Trägeraggregationsbandbreitenklasse in einer Fallbackgruppe umfasst ist, wobei jede Fallbackgruppe mehrere Trägeraggregationsbandbreitenklassen umfasst, wobei die Trägeraggregationsfähigkeitsinformationen definieren, dass eine Kommunikationsvorrichtung, die eine spezifische Trägeraggregationsbandbreitenklasse verwendet, auf das Verwenden einer Trägeraggregationsbandbreitenklasse in derselben Fallbackgruppe mit weniger Komponententrägern als die spezifische Trägeraggregationsbandbreitenklasse zurückfallen kann, wobei eine maximale unterstützte Komponententrägerbandbreite in einer Fallbackgruppe konstant ist,
- gekennzeichnet,
- wobei ein korrekter Untersatz der Trägeraggregationsbandbreitenklassen mit mindestens einer Fallbackgruppe verknüpft ist, in die sie nicht umfasst ist, und
- Verwenden der Trägeraggregationsfähigkeitsinformationen, um eine Fallbackträgeraggregationsauslegung (520) auszuwählen, wobei die mindestens eine Fallbackgruppe, die mit dem korrekten Untersatz von Trägeraggregationsbandbreitenklassen verknüpft ist, eine niedrigere maximale unterstützte Komponententrägerbandbreite aufweist als die Fallbackgruppe, in der der korrekte Untersatz von Trägeraggregationsbandbreitenklassen umfasst ist.

12. Verfahren nach Anspruch 11, wobei die Trägeraggregationsfähigkeitsinformationen definieren, dass eine Kommunikationsvorrichtung, die eine Trägeraggregationsbandbreitenklasse im korrekten Untersatz verwendet, in der Lage ist, zum Verwenden einer Trägeraggregationsbandbreitenklasse in der Fallbackgruppe zurückzufallen, die mit dem korrekten Untersatz von Trägeraggregationsbandbreitenklassen verknüpft ist.

13. Verfahren nach einem der Ansprüche 11 bis 12, wobei jede Trägeraggregationsbandbreitenklasse mindestens zwei durchgehende Komponententräger umfasst.

14. Nichttransitorisches computerlesbares Medium, auf dem ein Satz von computerlesbaren Anweisungen gespeichert ist, die, wenn sie von mindestens einem Prozessor ausgeführt werden, eine Einrichtung mindestens zu Folgendem veranlassen:
- Verarbeiten von Trägeraggregationsfähigkeitsinformationen (510), wobei die Trägeraggregationsfähigkeitsinformationen eine Vielzahl von Trägeraggregationsbandbreitenklassen definieren, wobei jede Trägeraggregationsbandbreitenklasse mit genau einer Anzahl von mehreren durchgehenden Komponententrägern verknüpft ist, die beim Kommunizieren unter Verwendung der jeweiligen Trägeraggregationsbandbreitenklasse verwendet werden, wobei jede Trägeraggregationsbandbreitenklasse in einer Fallbackgruppe umfasst ist, wobei jede Fallbackgruppe mehrere Trägeraggregationsbandbreitenklassen umfasst, wobei die Trägeraggregationsfähigkeitsinformationen definieren, dass eine Kommunikationsvorrichtung, die eine spezifische Trägeraggregationsbandbreitenklasse verwendet, auf das Verwenden einer Trägeraggregationsbandbreitenklasse in derselben Fallbackgruppe mit weniger Komponententrägern als die spezifische Trägeraggregationsbandbreitenklasse zurückfallen kann, wobei eine maximale unterstützte Komponententrägerbandbreite in einer Fallbackgruppe konstant ist,
- gekennzeichnet,
- wobei ein korrekter Untersatz der Trägeraggregationsbandbreitenklassen mit mindestens einer Fallbackgruppe verknüpft ist, in die sie nicht umfasst ist, und
- Verwenden der Trägeraggregationsfähigkeitsinformationen, um eine Fallbackträgeraggregationsauslegung (520) auszuwählen, wobei die mindestens eine Fallbackgruppe, die mit dem korrekten Untersatz von Trägeraggregationsbandbreitenklassen verknüpft ist, eine niedrigere maximale unterstützte Komponententrägerbandbreite aufweist als die Fallbackgruppe, in der der korrekte Untersatz von Trägeraggregationsbandbreitenklassen umfasst ist.

15. Computerprogramm, das dazu ausgelegt ist, einen Computer zu veranlassen, mindestens Folgendes durchzuführen, wenn es ausgeführt wird:
- Verarbeiten von Trägeraggregationsfähigkeitsinformationen (510), wobei die Trägeraggregationsfähigkeitsinformationen eine Vielzahl von Trägeraggregationsbandbreitenklassen definieren, wobei jede Trägeraggregationsbandbreitenklasse mit genau einer Anzahl von mehreren durchgehenden Komponententrägern verknüpft ist, die beim Kommunizieren unter Verwendung der jeweiligen Trägeraggregationsbandbreitenklasse verwendet werden, wobei jede Trägeraggregationsbandbreitenklasse in einer Fallbackgruppe umfasst ist, wobei jede Fallbackgruppe mehrere Trägeraggregationsbandbreitenklassen umfasst, wobei die Trägeraggregationsfähigkeitsinformationen definieren, dass eine Kommunikationsvorrichtung, die eine spezifische Trägeraggregationsbandbreitenklasse verwendet, auf das Verwenden einer Trägeraggregationsbandbreitenklasse in derselben Fallbackgruppe mit weniger Komponententrägern als die spezifische Trägeraggregationsbandbreitenklasse zurückfallen kann, wobei eine maximale unterstützte Komponententrägerbandbreite in einer Fallbackgruppe konstant ist,
- gekennzeichnet,
- wobei ein korrekter Untersatz der Trägeraggregationsbandbreitenklassen mit mindestens einer Fallbackgruppe verknüpft ist, in die sie nicht umfasst ist, und
- Verwenden der Trägeraggregationsfähigkeitsinformationen, um eine Fallbackträgeraggregationsauslegung (520) auszuwählen, wobei die mindestens eine Fallbackgruppe, die mit dem korrekten Untersatz von Trägeraggregationsbandbreitenklassen verknüpft ist, eine niedrigere maximale unterstützte Komponententrägerbandbreite aufweist als die Fallbackgruppe, in der der korrekte Untersatz von Trägeraggregationsbandbreitenklassen umfasst ist.

## Revendications

1. Appareil comprenant :
- des moyens pour traiter des informations de capacité d'agrégation de porteuses (510), les informations de capacité d'agrégation de porteuses définissant une pluralité de classes de largeur de bande d'agrégation de porteuses, chaque classe de largeur de bande d'agrégation de porteuses étant associée à exactement un nombre de porteuses composantes contiguës plurielles utilisées lors de la communication utilisant la classe de largeur de bande d'agrégation de porteuses respective, chaque classe de largeur de bande d'agrégation de porteuses étant comprise dans un groupe de repli, chaque groupe de repli comprenant des classes de largeur de bande d'agrégation de porteuses plurielles, les informations de capacité d'agrégation de porteuses définissant qu'un dispositif de communication utilisant une classe de largeur de bande d'agrégation de porteuses spécifique est en mesure de revenir à l'utilisation d'une classe de largeur de bande d'agrégation de porteuses dans le même groupe de repli avec moins de porteuses composantes que la classe de largeur de bande d'agrégation de porteuses spécifique, dans lequel une largeur de bande de porteuse composante prise en charge maximale dans un groupe de repli est constante,
- caractérisé,
- dans lequel un sous-ensemble approprié des classes de largeur de bande d'agrégation de porteuses est associé à au moins un groupe de repli dans lequel il n'est pas compris, et
- des moyens pour utiliser les informations de capacité d'agrégation de porteuses pour sélectionner une configuration d'agrégation de porteuses (520) de repli, dans lequel l'au moins un groupe de repli associé au sous-ensemble approprié des classes de largeur de bande d'agrégation de porteuses a une largeur de bande de porteuse composante prise en charge maximale inférieure à celle du groupe de repli dans lequel le sous-ensemble approprié des classes de largeur de bande d'agrégation de porteuses est compris.

2. Appareil selon la revendication 1, dans lequel les informations de capacité d'agrégation de porteuses définissent qu'un dispositif de communication utilisant une classe de largeur de bande d'agrégation de porteuses dans le sous-ensemble approprié est en mesure de revenir à l'utilisation d'une classe de largeur de bande d'agrégation de porteuses dans le groupe de repli associé au sous-ensemble approprié des classes de largeur de bande d'agrégation de porteuses.

3. Appareil selon l'une des revendications 1 et 2, dans lequel chaque classe de largeur de bande d'agrégation de porteuses comprend au moins deux porteuses composantes contiguës.

4. Appareil selon l'une des revendications 1 à 3, dans lequel les informations de capacité d'agrégation de porteuses comprennent au moins quatre groupes de repli distincts.

5. Appareil selon l'une des revendications 1 à 4, dans lequel les informations de capacité d'agrégation de porteuses comprennent au moins 23 classes de largeur de bande d'agrégation de porteuses.

6. Appareil selon l'une des revendications 1 à 5, dans lequel le sous-ensemble approprié comprend au moins une classe de largeur de bande d'agrégation de porteuses.

7. Appareil selon l'une des revendications 1 à 6, dans lequel la largeur de bande de porteuse composante prise en charge maximale dans le groupe de repli associé au sous-ensemble approprié de la classe de largeur de bande d'agrégation de porteuses se situe entre 97 et 103 mégahertz.

8. Appareil selon l'une des revendications 1 à 7, dans lequel la largeur de bande de porteuse composante prise en charge maximale dans le groupe de repli dans lequel le sous-ensemble approprié de la classe de largeur de bande d'agrégation de porteuses est compris se situe entre 197 et 203 mégahertz.

9. Appareil selon l'une des revendications 1 à 8, dans lequel, dans les classes de largeur de bande d'agrégation de porteuses dans le sous-ensemble approprié, un nombre de porteuses composantes contiguës se situe entre neuf et douze.

10. Appareil selon l'une des revendications 1 à 9, dans lequel, dans les classes de largeur de bande d'agrégation de porteuses dans le groupe de repli associé au sous-ensemble approprié des classes de largeur de bande d'agrégation de porteuses, un nombre de porteuses composantes contiguës varie de deux à huit.

11. Procédé comprenant :
- le traitement d'informations de capacité d'agrégation de porteuses (510), les informations de capacité d'agrégation de porteuses définissant une pluralité de classes de largeur de bande d'agrégation de porteuses, chaque classe de largeur de bande d'agrégation de porteuses étant associée à exactement un nombre de porteuses composantes contiguës plurielles utilisées lors de la communication utilisant la classe de largeur de bande d'agrégation de porteuses respective, chaque classe de largeur de bande d'agrégation de porteuses étant comprise dans un groupe de repli, chaque groupe de repli comprenant des classes de largeur de bande d'agrégation de porteuses plurielles, les informations de capacité d'agrégation de porteuses définissant qu'un dispositif de communication utilisant une classe de largeur de bande d'agrégation de porteuses spécifique est en mesure de revenir à l'utilisation d'une classe de largeur de bande d'agrégation de porteuses dans le même groupe de repli avec moins de porteuses composantes que la classe de largeur de bande d'agrégation de porteuses spécifique, dans lequel une largeur de bande de porteuse composante prise en charge maximale dans un groupe de repli est constante,
- caractérisé,
- dans lequel un sous-ensemble approprié des classes de largeur de bande d'agrégation de porteuses est associé à au moins un groupe de repli dans lequel il n'est pas compris, et
- l'utilisation des informations de capacité d'agrégation de porteuses pour sélectionner une configuration d'agrégation de porteuses (520) de repli, dans lequel l'au moins un groupe de repli associé au sous-ensemble approprié des classes de largeur de bande d'agrégation de porteuses a une largeur de bande de porteuse composante prise en charge maximale inférieure à celle du groupe de repli dans lequel le sous-ensemble approprié des classes de largeur de bande d'agrégation de porteuses est compris.

12. Procédé selon la revendication 11, dans lequel les informations de capacité d'agrégation de porteuses définissent qu'un dispositif de communication utilisant une classe de largeur de bande d'agrégation de porteuses dans le sous-ensemble approprié est en mesure de revenir à l'utilisation d'une classe de largeur de bande d'agrégation de porteuses dans le groupe de repli associé au sous-ensemble approprié des classes de largeur de bande d'agrégation de porteuses.

13. Procédé selon l'une des revendications 11 et 12, dans lequel chaque classe de largeur de bande d'agrégation de porteuses comprend au moins deux porteuses composantes contiguës.

14. Support non transitoire lisible par ordinateur sur lequel sont stockées des instructions lisibles par ordinateur qui, lorsqu'elles sont exécutées par au moins un processeur, amènent un appareil à au moins :
- traiter des informations de capacité d'agrégation de porteuses (510), les informations de capacité d'agrégation de porteuses définissant une pluralité de classes de largeur de bande d'agrégation de porteuses, chaque classe de largeur de bande d'agrégation de porteuses étant associée à exactement un nombre de porteuses composantes contiguës plurielles utilisées lors de la communication utilisant la classe de largeur de bande d'agrégation de porteuses respective, chaque classe de largeur de bande d'agrégation de porteuses étant comprise dans un groupe de repli, chaque groupe de repli comprenant des classes de largeur de bande d'agrégation de porteuses plurielles, les informations de capacité d'agrégation de porteuses définissant qu'un dispositif de communication utilisant une classe de largeur de bande d'agrégation de porteuses spécifique est en mesure de revenir à l'utilisation d'une classe de largeur de bande d'agrégation de porteuses dans le même groupe de repli avec moins de porteuses composantes que la classe de largeur de bande d'agrégation de porteuses spécifique, dans lequel une largeur de bande de porteuse composante prise en charge maximale dans un groupe de repli est constante,
- caractérisé,
- dans lequel un sous-ensemble approprié des classes de largeur de bande d'agrégation de porteuses est associé à au moins un groupe de repli dans lequel il n'est pas compris, et
- utiliser les informations de capacité d'agrégation de porteuses pour sélectionner une configuration d'agrégation de porteuses (520) de repli, dans lequel l'au moins un groupe de repli associé au sous-ensemble approprié des classes de largeur de bande d'agrégation de porteuses a une largeur de bande de porteuse composante prise en charge maximale inférieure à celle du groupe de repli dans lequel le sous-ensemble approprié des classes de largeur de bande d'agrégation de porteuses est compris.

15. Programme informatique configuré pour amener un ordinateur à effectuer au moins ce qui suit, lorsqu'il est exécuté :
- traiter des informations de capacité d'agrégation de porteuses (510), les informations de capacité d'agrégation de porteuses définissant une pluralité de classes de largeur de bande d'agrégation de porteuses, chaque classe de largeur de bande d'agrégation de porteuses étant associée à exactement un nombre de porteuses composantes contiguës plurielles utilisées lors de la communication utilisant la classe de largeur de bande d'agrégation de porteuses respective, chaque classe de largeur de bande d'agrégation de porteuses étant comprise dans un groupe de repli, chaque groupe de repli comprenant des classes de largeur de bande d'agrégation de porteuses plurielles, les informations de capacité d'agrégation de porteuses définissant qu'un dispositif de communication utilisant une classe de largeur de bande d'agrégation de porteuses spécifique est en mesure de revenir à l'utilisation d'une classe de largeur de bande d'agrégation de porteuses dans le même groupe de repli avec moins de porteuses composantes que la classe de largeur de bande d'agrégation de porteuses spécifique, dans lequel une largeur de bande de porteuse composante prise en charge maximale dans un groupe de repli est constante,
- caractérisé,
- dans lequel un sous-ensemble approprié des classes de largeur de bande d'agrégation de porteuses est associé à au moins un groupe de repli dans lequel il n'est pas compris, et
- utiliser les informations de capacité d'agrégation de porteuses pour sélectionner une configuration d'agrégation de porteuses (520) de repli, dans lequel l'au moins un groupe de repli associé au sous-ensemble approprié des classes de largeur de bande d'agrégation de porteuses a une largeur de bande de porteuse composante prise en charge maximale inférieure à celle du groupe de repli dans lequel le sous-ensemble approprié des classes de largeur de bande d'agrégation de porteuses est compris.
